# EUROPEAN PATENT APPLICATION

(11) **EP 2 015 192 A1**
(43) Date of publication of application: **14.01.2009**
(21) Application number: 07702160.8
(22) Date of filing: 22.01.2007
(51) Int. Cl.: G06F 13/36

(54) **A BUS ARBITRATION DEVICE**

(30) Priority: 17.03.2006 CN 200610024795
(71) Applicant: Shanghai Magima Digital Information Co., Ltd., Zhangjiang Hi-Tech Park, Pudong Shanghai 201203 (CN)
(72) Inventor: CHOU, Jen-ya, Shanghai 201203 (CN); ZHANG, Ya-lin, Shanghai 201203 (CN); DENG, Liang-ce, Shanghai 201203 (CN)
(74) Representative: Baroni, Matteo
(86) International application number: PCT/CN2007/000230
(87) International publication number: WO 2007/107070

(57) **Abstract**

A bus arbitration device includes a top arbiter, and the hierarchical bus arbitration device also includes a first arbiter. The said first arbiter arbitrates the first kind of requests, wherein the first kind of requests relates to the first kind of master units. The said second arbiter arbitrates the second kind of requests different from the first kind of requests, wherein the second kind of requests relates to the second kind of master units different from the first kind of master units. Wherein the said first arbiter and the said second arbiter are downward respectively from the top arbiter to form the hierarchical bus arbitration structure. Bus arbitration efficiency increases by this bus arbitration device.

## Description

### Background of the Invention

### Technical Field

The present invention relates to a bus arbitration device.

### Description of the Prior Art

Popularity of multimedia application raises much claims on bandwidth and real-time of data transmission inside computer system, forcing designers to increase bus frequency and bus efficiency.

A computer system comprises multiple units. Theses units are classified into master units and slave units (slave units generally are memory, for example SDRAM), which exchange data through bus. When a master unit accesses a slave unit, it issues a request to the bus. A bus arbiter arbitrates among the received requests, and selects a request with the highest priority. The corresponding master unit controls the bus to access the corresponding slave unit.

A traditional bus structure is one-level arbitration, that is, all master units link with one bus arbiter. Seen from physical implementation, a basic unit of the arbiter is two-line to one-line selection multiplex (MUX). Of course, calculation and control circuits are included. More master units mean more multiplex needed by an arbiter, more multiplex through which a request passes from an input of an arbiter to an output, and more time which data transmission takes; additionally, more master units mean more computation once arbitration of an arbiter needs, and more time computation needs. These two factors, especially the former, deeply influence on improvement of bus frequency and bus bandwidth. Additionally, all master units connect with one arbiter, resulting in sources around the arbiter are sparse. To reinforce driving power, additional components are entailed. For example, two inverters are added to the circuit lines. This way, however, extends latency of the circuit, and restrains improvement of bus frequency. All master units connecting with one arbiter makes circuit lines inside a chip much complicated. Finally, if traditional one-level arbitration is adapted, the whole arbitration system has to be re-designed for adding master units, which is not universal.

In order to solve the problem above, the industry uses hierarchical bus arbitration technology. The hierarchical bus arbitration groups master units by an amount N (N is an integer more than one). Each group of N master units shares a bottom arbiter. The bottom arbiters are grouped by the amount N, and each group of N bottom arbiters shares a sub-bottom arbiter, on the analogy of this, until a top arbiter. In this structure, as for higher arbiters, all the non-top arbiters can be seen as a master unit for participating in competition. As required, master units and non-top arbiters can participate in the higher arbitration together. Thus, the whole arbitration is interrupted to hierarchical tree-like arbitration structure. The advantages are the follows: the first, the arbitration structure is pipeline, and once complete arbitration (from a request is issued by a master unit to it is output by the top arbiter) averagely takes much less time than a traditional one-level arbitration; the second, each arbiter is responsible of less master units, shortening arbitration time; the third, the arbiters can be distributed according to positions of the master units in the chip, simplifying lines inside the chip; the fourth, the structure of the arbiters are the same, and only need to add arbitration levels and arbiters instead of re-design when master units are added, and therefore are universal. Generally speaking, the hierarchical arbitration effectively increases frequency and universality of bus arbitration structure, and simplifies lines inside a chip. For example, U.S. Patent No. 6,385,678 clearly shows a hierarchical arbitration structure in Fig. 9.

It is well known that nowadays DRAM is generally accessed by bursts. Stream burst transmission protocol is proposed in the industry in order to increase data transmission efficiency. This protocol prescribes that, multiple particular continuous bursts between a master unit and a slave unit are not interrupted in the process of passing an arbiter, and only the first burst is required to be arbitrated. These continuous bursts are one stream burst. Stream burst transmission protocol vastly saves time of bus arbitration, particularly in the hierarchical arbitration structure and the system with much data throughput.

For facilitating interpretation, the system is assumed in ideal state (no jam). Once arbitration needs one clock cycle, and one burst output needs one clock cycle (ordinarily arbitration calculation and output sampling can not be completed in one clock cycle).

In the current stream burst transmission protocol, when there are two continuous stream bursts, the bus waits until the previous stream burst is finished, and then starts new arbitration for selecting which is input. Before the last burst of the previous stream burst is issued, the arbitration circuit cannot get the arbitration information of immediately next burst. So each stream burst needs two clock cycles from arbitration of the first burst thereof to sampling and output of the bursts. The detailed is below.

To transfer a stream burst, each burst is set a burst mark. There are two kinds of burst marks in the current stream burst transmission system. LAST stands for the last burst of a stream burst, and SAME stands for the bursts other than the last burst (particularly, if a stream burst has only one burst, the burst mark is LAST). According to burst marks, a bus arbiter determines whether the arbiter changes selection state.

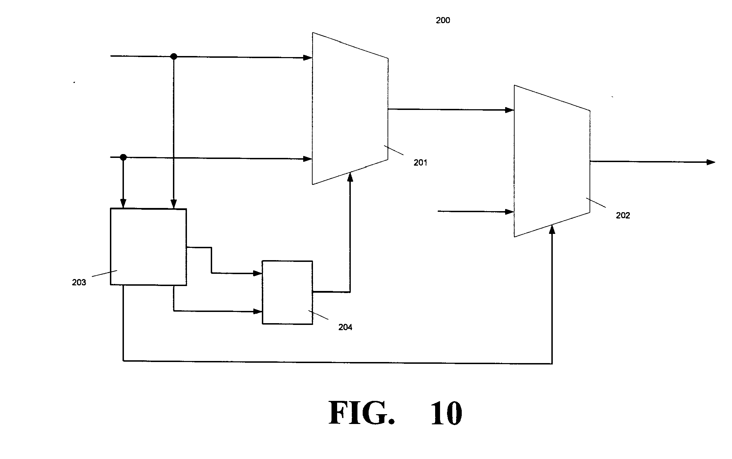

An example of current stream burst transmission is explained below. Referring to Fig. 10, an arbiter 200 comprises a multiplex MUX 201, a multiplex MUX 202, an arbitration calculation module 203 and a register 204. The multiplex 201 has an input port for inputting requests; the register 204 controls selection state of the multiplex 201; the multiplex 202 has two input ports, of which the first input port couples to an output port of the multiplex 201, and the second input port is ineffective; the arbitration calculation module 203 performs arbitration and calculation, and provides values and enable signals of the register 204 and selection signals of the multiplex 202.

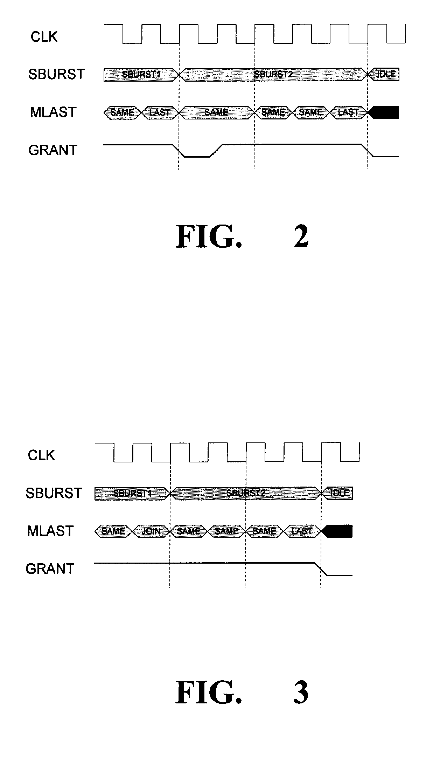

The arbitration calculation module 203 is combinational logic, and automatically arbitrates and calculates to get calculation results in every clock cycle. Only if the enable signal of the register 204 is effective, the calculation result can be uploaded into the register 204 upon a clock rise edge, and thus changes the selection state of the multiplex 201. After the first burst of a stream burst is output by an arbiter, the arbiter remains the current selection state, that is, the enable signal of the register 202 remains ineffective; when a burst with a burst mark LAST is output, the arbitration and calculation module 203 controls the multiplex 202 to select the second input port. If another stream burst immediately follows the burst with burst mark LAST, the arbitration and calculation module 203 sends effective enable signal and controls the multiplex 202 to select the first input port at the first clock cycle after the burst with burst mark LAST is output. At the next clock cycle, the multiplex 201 changes selection state according to the value of the register 204. In this way, in ideal state, the first burst of the second stream burst needs two clock cycles for output. Fig. 2 shows the timing diagram. In Fig. 2, SBURST stands for time during which stream bursts are output. GRANT is selection signal (high is effective) of an arbiter. MLAST stands for time during which bursts are output. CLK is clock. In Fig. 2, the second stream burst (the stream burst with mark SBURST2) includes four bursts. As shown in Fig. 2, in ideal state (no jam), the second stream burst totally takes five clock cycles from arbitration to output.

However, for the current hierarchical arbitration structure, from a bottom arbiter to a top arbiter, the first burst of a stream burst takes one clock cycle more than other bursts. More levels the bus structure has, more extra time the first burst of the stream burst takes from a bottom arbiter to a top arbiter. This is not benefit for increasing bus efficiency.

To take full use of bus bandwidth and further increase efficiency of data transmission, a reasonable bus arbitration scheme needs to be designed by combining methods for accessing master units and slave units. But at present, the hierarchical arbitration bus structure in the industry cannot take full use of bus bandwidth.

Nowadays SDRAM, in general, is comprised of multiple logic memory banks, and permits multiple logic memory banks open simultaneously. Optimization is based on this characteristic in the system design, such that two master units perform two consecutive write/read operations on SDRAM before the logic memory banks switch, and the other logic memory bank has opened the row to be write/read next time. So the logic memory banks switch without additional time consumption, saving time of row precharge. However, if two consecutive write/read operations need switch different rows of the same logic memory bank, precharge time cannot be saved. This situation should be avoided. Precharge time in this situation cannot be saved without a pertinent bus arbitration scheme. In addition, stream bursts of master units requiring much on delay is relatively short, while stream bursts of master units requiring much on bandwidth is relatively long. It should be avoided that stream bursts of master units which requires much on bandwidth interrupts stream bursts of master units which requires much on delay, otherwise, interrupting each other frequently, and making system design much complicated.

The prior art hierarchical bus arbitration structure does not design bus arbitration scheme according to features of master units, and therefore can not effectively avoid that two consecutive write/read operations switch different rows of the same logic memory banks and that the requests with long stream burst interrupt the requests with short stream burst. The prior art bus arbitration structure cannot optimize use of the bandwidth by limitation of defects of itself structure.

In consideration of a series of defects of the prior art bus arbitration structure, the object of the present invention is to provide a bus arbitration structure promoting efficiency of bus arbitration and data transmission.

### Summary of the Invention

In consideration of a series of defects of the prior art bus arbitration structure, the object of the present invention is to provide a bus arbitration structure promoting efficiency of bus arbitration and data transmission.

A bus arbitration device is provided which includes a top arbiter. The hierarchical bus arbitration device further includes: a first arbiter, said first arbiter arbitrating the first kind of requests, wherein the first kind of requests relate to the first kind of master units; a second arbiter, said second arbiter arbitrating the second kind of requests different from the first kind of requests, wherein the second kind of requests relate to the second kind of master units different from the first kind of master units. Wherein the first arbiter and the second arbiter are downward respectively from the top arbiter to form a hierarchical arbitration structure.

Said first kind of master units are master units requiring much on delay, and said second kind of master units are master units requiring much on bandwidth.

In the hierarchical arbitration structure, arbiters of respective levels are coupled by buffers, and the master units are coupled with the arbiters by buffers.

The buffers are first-in first-out buffers.

A depth of each of said buffers is two.

Said top arbiter comprises a state machine for controlling operation states of the top arbiter, wherein the state machine comprises three states: idle state, selecting the first kind of requests, and selecting the second kind of requests.

The system uses stream burst data transmission, and in order to change from the state of selecting the first kind of requests to the state of selecting the second kind of requests, said top arbiter must satisfy the following requirement, that is a stream burst of a currently selected first kind of request has finished transmission, while a second kind of request is waiting for output.

The bus arbitration device of the present invention uses hierarchical and group-by-group bus arbitration structure, raising bus arbitration efficiency.

### Brief Description of the Drawings

Fig. 1 is a simplified structural view of the bus arbitration device of the present invention.
Fig. 2 is a timing diagram of stream transmission before a burst mark transformation system is used.
Fig. 3 is a timing diagram of stream transmission after a burst mark transformation system is used.
Fig. 4 is a state machine chart of a top arbiter of the present invention.
Fig. 5 is a state machine chart of a first arbiter of the present invention.
Fig. 6 is a functional module diagram of a second arbiter of the present invention.
Fig. 7 is a functional module diagram of a first arbiter of the present invention.
Fig. 8 is a functional module diagram of the top arbiter of the present invention.
Fig. 9 is a functional module diagram of a buffer of the present invention.
Fig. 10 is a selection functional module diagram of the arbiters.

### Detailed Description of the Preferred Embodiments

To overcome deficiencies of the prior art stream burst transmission and further promotes bus efficiency, the present invention provides a burst mark transformation system. The burst mark transformation system of the present invention adds a burst mark, which is depicted by JOIN, relative to the prior art stream burst transmission method. When a system finds a burst with a burst mark of LAST followed by another burst, that is, finds two consecutive stream bursts, the burst mark of LAST is changed to JOIN (a burst mark is changed under two situations, and buffers and arbiters are described below, in which master units can issue JOIN burst mark directly.)

When an arbiter 200 (referring to Fig. 10) (There are three kinds of arbiters in this embodiment, including first arbiters, second arbiters and a top arbiter. This will be described below. For simplifying explanation for the burst mark transformation system, the first arbiters and the second arbiters are all called the arbiter 200 based on selection functions.) detects a steam burst with a burst mark JOIN, the arbitration and calculation unit 203 issues an effective enable signal. At the next clock rising edge, the register 204 will upload a new arbitration result. The arbitration result is produced by relevant information of the burst with the burst mark JOIN (another burst input from the same input port follows this burst) and relevant information (arbitration information, for example priority information) of another burst input from the other input port (if have). The multiplex 201 changes selection state according to the value of the register 204. Therefore, in an ideal state (no jam), the first burst of the second stream burst takes only one clock cycle to output. Fig. 3 shows the detailed timing, in which SBURST stands for the time that every stream burst takes to output, GRANT is the selection signal of arbiters (high is effective), MLAST stands for the time output of every burst takes, and CLK is clock. The second stream burst (marked by SBURST2) in Fig. 3 comprises four bursts. In an ideal state, the second stream burst takes four clock-cycles form arbitration to output. Obviously, compared to the scheme of Fig. 2, which does not utilize the burst mark transformation system, the burst mark transformation system of this invention saves one clock cycle. Obviously, for hierarchical arbitration, the burst mark transformation system promotes efficiency markedly. More arbitration levels there are, more markedly the efficiency is promoted.

The burst mark transformation system is a kind of pre-arbitration system. There provided two pre-arbitration schemes for selection. The first scheme is, the relevant information (for example priority information) carried by a burst with burst mark JOIN replaces the relevant information carried by a burst immediately following on the same path (if have, otherwise if no, the burst with burst mark JOIN is filtered out as ineffective burst and does not join new arbitration). This scheme is easily implemented in hardware. But the arbitration result may not meet the standard if relevant information of the two bursts is inconsistent. The second scheme is, input of an arbitration circuit of the arbiter is designed in such a way that the lower buffers have two levels in depth. The bursts with burst mark JOIN are in the first memory block of the buffers, and another bursts are in the second memory block. Meantime the arbitration circuit chooses the relevant information carried by the bursts in the second memory block to arbitrate. The arbitration result of this design meets the standard, but this design is difficult in hardware implementation. The first scheme is used in this embodiment, and will be described more detailed.

A bus arbitration structure is provided according to another aspect of the present invention. In a computing system, master units are generally classified into two kinds, master units requiring much on delay and master units requiring much on bandwidth. Requests of the master units requiring much on delay need timely response of the system, otherwise, incurring errors of the system. For example, in digital TV decoding chips, CPU and de-multiplex (DEMUX) are master units requiring much on delay. The master units requiring much on bandwidth produce large data throughput. For example, in digital TV decoding chips, a video decode module is a master unit requiring much on bandwidth. To simplify description, the master units requiring much on bandwidth are called a first kind of master units, requests thereof are a first kind of requests, bursts thereof are a first kind of bursts, and stream bursts thereof are a first kind of stream bursts. The master units requiring much on bandwidth are called a second kind of master units, requests thereof are a second kind of requests, bursts thereof are a second kind of bursts, and stream bursts thereof are a second kind of stream bursts. (Notably, although the master units requiring much on bandwidth are called a first kind of master units and the master units requiring much on bandwidth are called a second kind of master units, the description of the first and the second are just for the purpose of distinguishing the different master units. Alternatively, the master units requiring much on bandwidth are called a second kind of master units, and the master units requiring much on bandwidth are called a first kind of master units. Description below can also be changed, correspondingly.)

In system design, SDRAM is divided into multiple parts and is assigned to corresponding master units for storage. In order to promote data transmission efficiency, storage space of the two kinds of master units are arranged in different logic memory banks as possible. In this embodiment, the first kind of stream bursts interrupt the second kind of stream bursts frequently, so the arrangement allows different master units switch logic memory banks when accessing SDRAM, thereby saving time for row precharge. Of course, storage space can be arranged based on analysis on efficiency of switch between the master units.

The first kind of master units and the second kind of master units are arbitrated hierarchically and group by group in this embodiment, so as to precisely control time of two kinds of master units controlling the bus. In order to avoid reduction of efficiency arising from two consecutive SDRAM operations switching different rows in the same logic memory bank, and decrease complexity of the design, this embodiment also prescribes arbitration the following principles: stream bursts in one group can not interrupt each other; in the top arbiter, a first kind of stream burst is allowed to interrupt a second kind of stream burst, and a second kind of stream burst is inhibited to interrupt a first kind of stream burst.

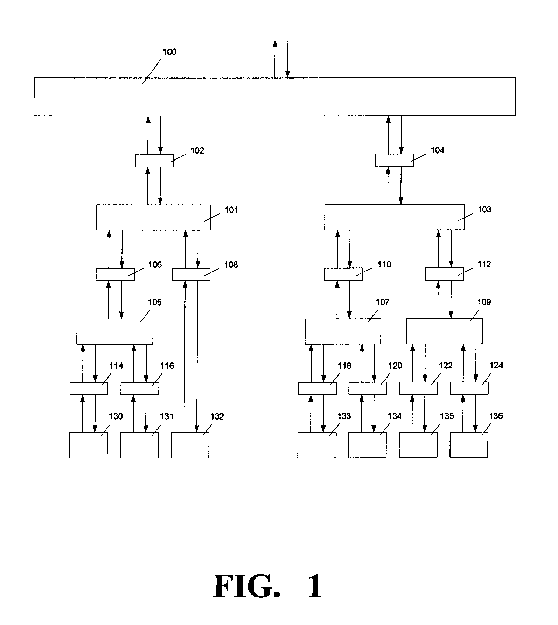

Arbitration hierarchy is decided according to amount of master units, amount of arbitration interfaces of arbiters, and coupling ways. For simplifying description, in this embodiment, all the non-top arbiters have two arbitration interfaces. Of course, these amounts can change according to practical demand. For example, four arbitration interfaces are set. Referring to Fig. 1, an embodiment of a bus arbitration device of the present invention is shown. In the embodiment there are seven master units, in which a master unit 130, a master unit 131 and a master unit 132 are the first kind of master units (the master units requiring much on delay), while a master unit 133, a master unit 134, a master unit 135 and a master unit 136 are the second kind of master units (the master units requiring much on bandwidth). An arbitration device of this embodiment comprises: a top arbiter 100; a buffer 102 and a buffer 104 respectively coupling to the top arbiter 100; a first arbiter 101 coupling to the buffer 102; a buffer 106 and a buffer 108 respectively coupling to the first arbiter 101; another first arbiter 105 coupling to the buffer 106; a buffer 114 and a buffer 116 respectively coupling to the another first arbiter 105, in which the master unit 130 couples to the buffer 114, the master unit 131 couples to the buffer 116, the master unit 132 couples to the buffer 108; a second arbiter 103 coupling to the buffer 104; a buffer 110 and a buffer 112 respectively coupling to the second arbiter 103; another second arbiter 107 coupling to the buffer 110; a buffer 118 and a buffer 120 respectively coupling to the another second arbiter 107; another second arbiter 109 coupling to the buffer 112; a buffer 122 and a buffer 124 coupling to the another second arbiter 109, wherein the master unit 133 couples to the buffer 118, the master unit 134 couples to the buffer 120, the master unit 135 couples to the buffer 122, and the master unit 136 couples to the buffer 124. Accordingly, the bus arbitration device of the embodiment is a bus arbitration device comprising a top arbiter, the first arbiters and the second arbiters, in which the first arbiters arbitrate requests of the first kind of master units, and the second arbiters arbitrate requests of the second kind of master units. Moreover, the first arbiters and the second arbiters are downward respectively from the top arbiter to form hierarchical bus arbitration structure. Thus the bus arbitration device of the embodiment is a hierarchical and group-by-group bus arbitration structure. The buffers of the embodiment are, for example, first-in first-out buffers (FIFO), which have two levels in depth and can store two requests. In the arbitration structure of Fig. 1, the first kind of master units and the second kind of master units can compete on the top arbiter 100 only. Viewed from hardware, only this structure can easily implement the arbitration scheme in which the first kind of stream bursts can interrupt the second kind of stream bursts, whereas the second kind of stream bursts can not interrupt the first kind of stream bursts, and therefore promoting bus arbitration efficiency.

According to an embodiment of the present invention, the first kind of requests (requests of the first kind of master units), are assigned two priority levels HCREQ and LCREQ. The second kind of requests (requests of the second kind of master units), are assigned two priority levels HREQ and LREQ. The priority order of the four priority levels is HCREQ > HREQ > LREQ > LCREQ. In default state, the first kind of requests competes with the priority HCREQ, and the second kind of requests competes with the priority LREQ.

In default state, the first kind of requests competes with the priority HCREQ, and the second kind of requests competes with the priority LREQ. If there is no limitation system, the first kind of requests perhaps occupies the top arbiter for a long period of time so that the top arbiter cannot respond the second kind of requests for a long period of time. To solve this problem, this embodiment utilizes a time window limitation system. The time window limitation system defines a time length M corresponding to some first kind of master unit or some first arbiter. On the premise of meeting system requirements, it is prescribed that, after requests from the first kind of master unit or the first arbiter are responded N times by an upper arbiter during the time length M, priority of a following first kind of stream burst is degraded to LCREQ, and the burst is appointed to a life period. When starting the second time period M, the life period of low priority is over, and priority thereof is raised to HCREQ. Only when no second kind of requests competes, the top arbiter responds the first kind of stream burst with priority level LCREQ. The parameter, for example, time period M, response amount N and value of whether the time window limitation system being used, are configured in registers of the first arbiters.

One embodiment of the present invention utilizes the priority raising system. As described above, in default, the second kind of stream burst competes with priority LREQ. The bus structure is tree-like structure. If another second kind of stream burst is blocked for a long period of time by some second kind of stream bust, all the second kind of stream bursts lower than this node will be blocked. If the blocked second kind of the stream bursts requires response of the system in time, the blocking state makes the system run abnormally. To solve this problem, in this embodiment, when a second kind of stream burst is stored in some buffer, the buffer appoints the second kind of stream bursts with a low priority life period according to registers of an upper second arbiter. This life period may be transferred with the bursts. When the life period ends, priority of the second kind of stream bursts are raised to HREQ. In this branch, priority of all the second kind of stream bursts higher than the second kind of stream burst with raised priority level are raised to HREQ. Thus the blocked second kind of stream bursts, which need timely response, can be responded in time.

The priority raising system is also applied to the first kind of stream bursts. When a first kind of stream burst with priority LCREQ is chosen by a first arbiter, and a fist kind of stream burst with priority HCREQ comes to another input port of the first arbiter, or when a first kind of stream burst with priority LCREQ is followed by a stream burst with a priority HCREQ, the priority of the first kind of stream burst with priority LCREQ is raised to HCREQ. Moreover, in this branch, priority of all the first kind of stream bursts higher than the first kind of stream bursts with raised priority is raised to HCREQ. Therefore, it is avoided that, a first kind of stream burst with priority LCREQ is blocked on arbiters higher than the current arbiter so that a first kind of stream burst with priority HCREQ is blocked on the current arbiter.

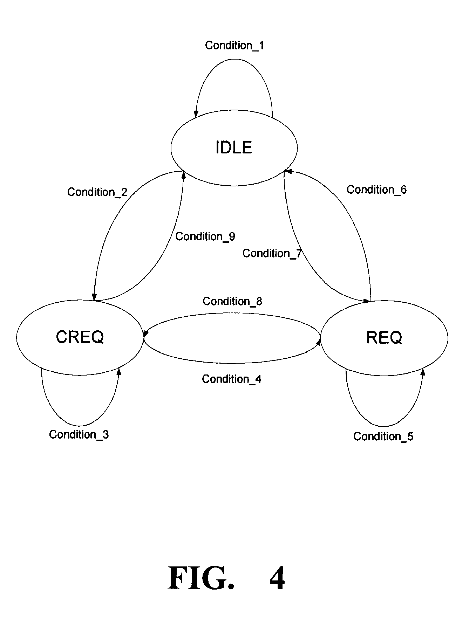

Referring to Fig. 4, a state machine of the top arbiter is exemplarily shown. In the drawing, IDLE stands for idle state, CREQ stands for selection of a first kind of stream burst, REQ stands for selection of a second kind of stream burst. States transition conditions are listed below:

| Condition_1 | no requests input at present |
|---|---|
| Condition_2 | inputting a first kind of request with priority HCREQ; or inputting a first kind of request with priority LCREQ, at the same time no second kind of request being input |
| Condition_3 | outputting the first kind of request at present, and burst marks are SAME or JOIN |
| Condition_4 | outputting a first kind of request at present, burst mark being LAST, and at the same time inputting a second kind of request |
| Condition_5 | outputting a second kind of request at present, at the same time no first second kind of request with priority HCREQ being input |
| Condition_6 | outputting a second kind of request at present, burst mark being LAST, at the same time no first kind of request being input |
| Condition_7 | inputting a second kind of request, and at the same time no first kind of request with priority HCREQ being input |
| Condition_8 | arbitrating and outputting a second kind of request at present, and inputting a first kind of request with priority HCREQ; or arbitrating and outputting a second kind of request at present, burst mark being LAST, and at the same time inputting a first kind of request |
| Condition_9 | outputting a first kind of request at present, burst mark being LAST, and no second kind of request being input |

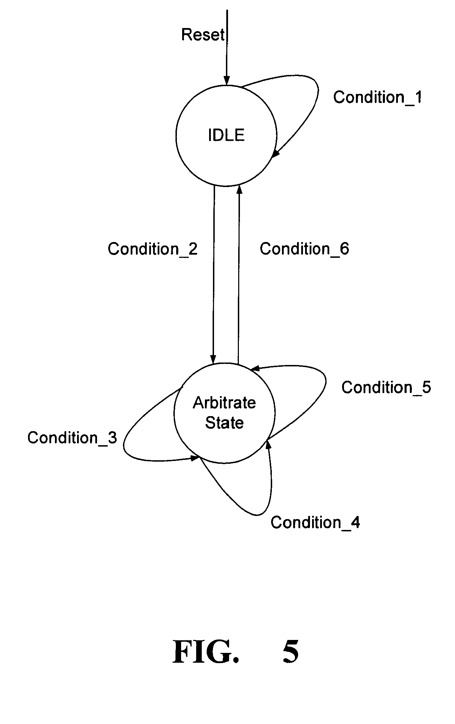

Referring to fig. 5, a state machine of a non-top arbiter (a first arbiter or a second arbiter) is exemplarily shown (a first arbiter or a second arbiter having the same state machine). In the drawing, IDLE stands for idle state, and Arbitrate State stands for arbitration state. States transition conditions are listed below:

| | |
|---|---|
| Condition_1 | no requests in a lower buffer; or an upper buffer being full |
| Condition_2 | at least one request in a lower buffer |
| Condition_3 | the burst mark of the request getting arbitration right being SAME; or an upper buffer being full |
| Condition_4 | the burst mark of the request getting arbitration right JOIN; or an upper buffer being not full |
| Condition_5 | the burst mark of the request getting arbitration right being LAST, at least one request in other lower buffers, and an upper buffer being not full |
| Condition_6 | the burst mark of the request getting arbitration right being LAST, no requests in other lower buffers, and an upper buffer being not full |

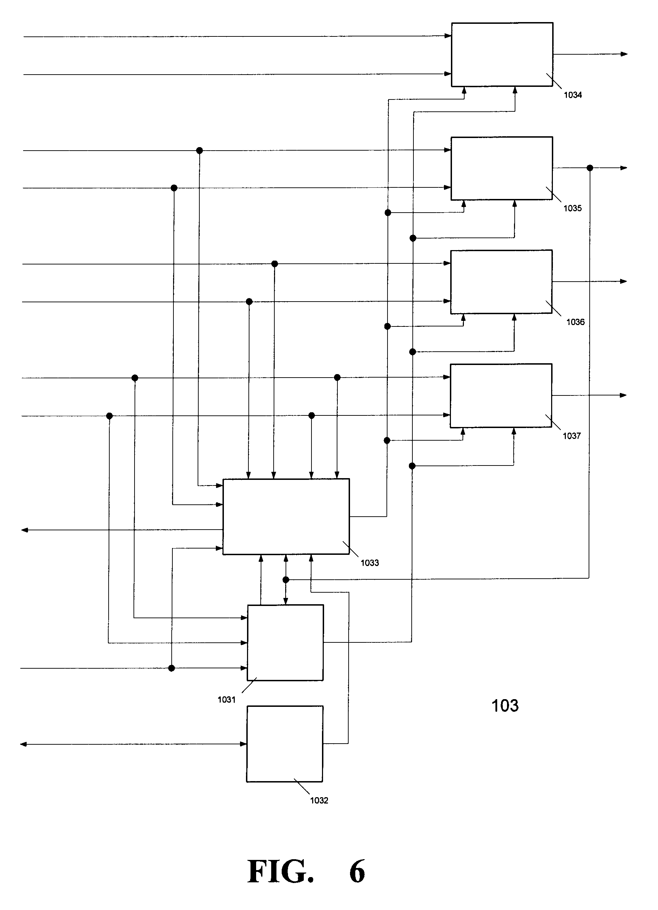

Referring to Fig. 6, which is a functional module diagram of a second arbiter 103. The second arbiter 103 comprises a state machine 1031, a register set 1032, a calculation module 1033, a first multiplex 1034, a second multiplex 1035, a third multiplex 1036 and a fourth multiplex 1037. The state machine 1031 controls operation states of the second arbiter 103. The register set 1032 stores setting of the arbiters. The setting includes whether the fixed priority algorithm or a weighted cycle algorithm is used, instruction of whether a lower buffer uses a priority raise system, and how long the life cycle is if the priority raise system is used. The calculation module 1033 calculates and arbitrates for selecting an input path. The fourth multiplex 1037 selects among request type signals input from lower buffers. The request type signals include three types, IDLE (no request), REQ (requests requiring much on bandwidth) and CREQ (requests requiring much on delay).The third multiplex 1036 selects among priority signals input from lower buffers. The priority signals comprise two types, high and low. The third multiplex 1036 can also raise priority. The combination of request type signals and priority signals defines priority levels mentioned above. The second multiplex 1035 selects among burst mark signals input from lower buffers, and can transform burst marks. The first multiplex 1034 selects among other input signals input from lower buffers.

The calculation module 1033 calculates as the following steps: the first, according to request type signals, filtering master units or lower arbiters to compete; the second, according to priority signals, further filtering master units or lower arbiters which will be arbitrated with fixed priority algorithm or weighted cycle algorithm; the third, calculating with fixed priority algorithm or weighted cycle algorithm, and choosing an input signal path. The whole arbitration process takes only one clock cycle.

Several states about burst mark transformation and priority raise in the second arbiter 103 are described below.

When the system uses burst mark transformation system, if the buffer 110 is selected at present, only a second kind of request with burst mark LAST in the buffer 110, and if there is a second kind of request in the buffer 112, the second multiplex 1035 of the second arbiter 103 transforms the burst mark of the selected second kind of request to JOIN, and the request is filtered to an ineffective request which will not join new arbitration. So only the second kind of request in the buffer 112 joins arbitration.

When the system uses burst mark transformation system, if the buffer 110 is selected at present, and the selected second kind of request has low priority, and if there is a second kind of request in the buffer 112 and with high priority, the third multiplex 1036 of the second arbiter 103 raises the selected second kind of request to high priority.

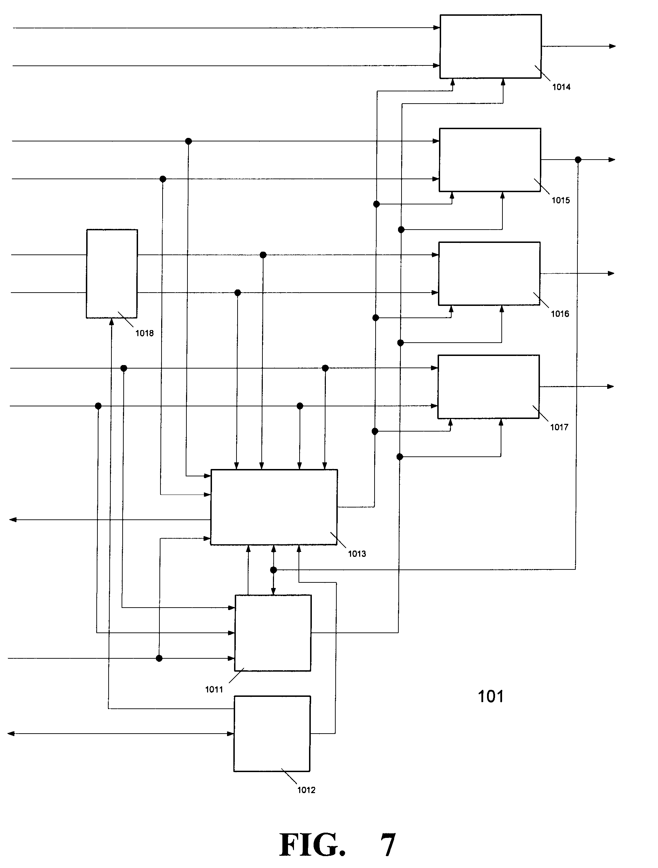

Referring to Fig. 7, which is a functional module diagram of a first arbiter 101. The first arbiter 101 comprises a state machine 1011, a register set 1012, a calculation module 1013, a first multiplex 1014, a second multiplex 1015, a third multiplex 1016, a fourth multiplex 1017 and a time window limitation module 1018. The state machine 1031 controls operation states of the first arbiter 101. The register set 1012 stores setting of the arbiter. The setting comprises whether the fixed priority algorithm or a weighted cycle algorithm is used, whether a time window limitation system is used, and time period length M and response times N if the time window limitation system is used. The calculation module 1013 calculates to select an input signal path. The fourth multiplex 1017 selects among request type signals input from lower buffers. The request type signals include three types, IDLE (no request), REQ (requests requiring much on bandwidth) and CREQ (requests requiring much on delay). The third multiplex 1016 selects among priority signals input from lower buffers. The priority signals comprise two types, high and low. The third multiplex 1016 can also raise priority. The second multiplex 1015 selects among burst mark signals input from lower buffers, and can transform burst marks. The first multiplex 1014 selects among other input signals input from lower buffers. The time window limitation module 1018 deals with input priority signals by the time window limitation system.

The calculation module 1013 calculates as the following steps: the first, according to request type signals, filtering master units or lower arbiters which will compete; the second, according to priority signals through the time window limitation module, further filtering master units or lower arbiters which will be arbitrated with fixed priority algorithm or weighted cycle algorithm; the third, calculating with fixed priority algorithm or weighted cycle algorithm, and choosing an input signal path. The whole arbitration process takes only one clock cycle.

Several states about burst mark transformation and time window limitation operations in the first arbiter 101 are described below.

When the system uses burst mark transformation system, if the first arbiter 101 selects the buffer 106 at present, only a first kind of request with burst mark LAST in the buffer 106, and if there is a first kind of request in the buffer 108, the second multiplex 1015 transforms the burst mark of the selected first kind of request to JOIN, and the first kind of request is filtered to an ineffective request which will not join pre-arbitration. So only the first kind of request in the buffer 108 joins competition.

The time window limitation module 1018 (The first arbiter 101 has a time window limitation module corresponding to the buffer 106 and a time window limitation module corresponding to the buffer 108. For simplifying description, the two time window limitation modules are combined to one time window limitation module 1018.) counts on times the buffer 106 and the buffer 108 are responded during a prescribed time period M according to setting of the register set 1012. When the count exceeds a prescribed value, priority of next first kind of stream burst of a corresponding buffer falls to low and is given a life period. The life period lasts from the current time (the time when the priority falls) to the time when the time period M ends. Whether the time window limitation system is used can be implemented by setting the register set 1012. If the time window limitation system is not used, priority signals through the time window limitation module 1018 maintains unchanged. The low priority life cycle delivers with the bursts. When the bursts get the response from the top arbiter 100 or the low priority life cycle equals zero, the low priority life cycle is over, and burst priority is raised to high again.

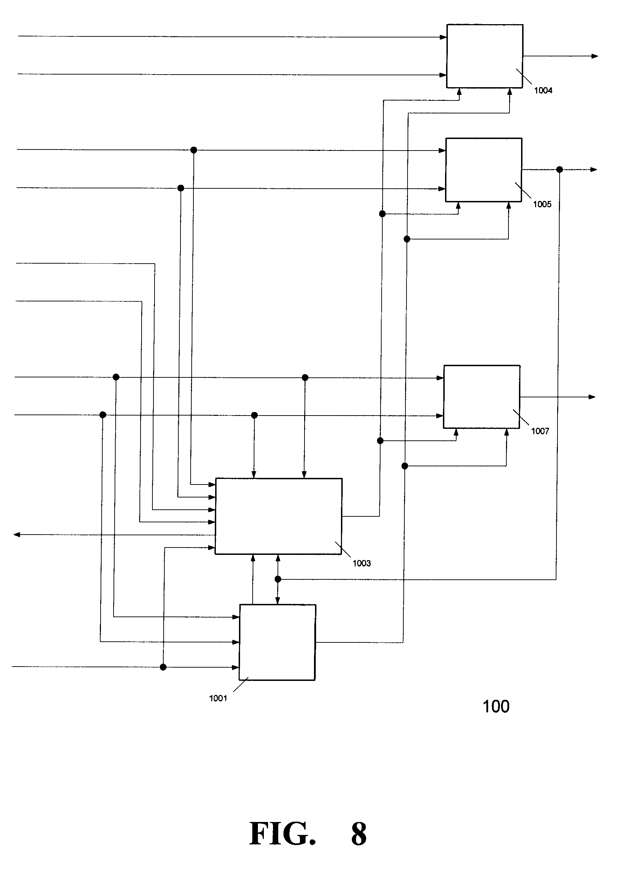

Referring to Fig. 8, which is a functional module diagram of a top arbiter 100. The top arbiter 100 comprises a state machine 1001, a calculation module 1003, a fourth multiplex 1007, a second multiplex 1005 and a first multiplex 1004. The state machine 1001 controls operation states of the top arbiter 100. The calculation module 1003 calculates to select an input signal path. Only two input signal paths can be selected by the top arbiter 100, that is, the output buffer 102 of the second-top level first arbiter 101 and the output buffer 104 of the second-top level first arbiter 103. The fourth multiplex 1007 selects among input request type signals. The request type signals include three types, IDLE (no request), REQ (requests requiring much on bandwidth) and CREQ (requests requiring much on delay). The second multiplex 1005 selects among burst mark signals. The first multiplex 1004 selects among other input signals.

The calculation module 1003 uses the fixed priority algorithm for arbitration, that is HCREQ > HREQ > LREQ > LCREQ. The top arbiter 100 also has a rule, that is, stream bursts of master units requiring much on delay can interrupt stream bursts of master units requiring much on bandwidth, while stream bursts of master units requiring much on bandwidth cannot interrupt stream bursts of master units requiring much on delay. The introduction about state machine of the top arbiter 100 shows the detailed.

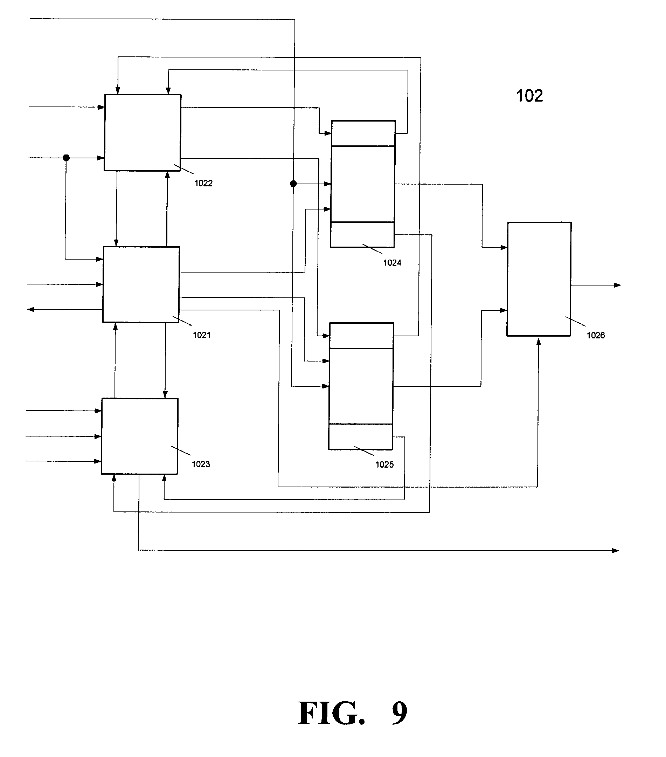

Referring to Fig. 9, which is a functional module diagram of a buffer according to an embodiment of the present invention. All buffers have the same structure in this embodiment, and thus only the buffer 102 is set as an example for explanation. The buffer 102 comprises a buffer controller 1021, a burst mark transformation module 1022, a priority raise module 1023, a first memory module 1024, a second memory module 1025 and a multiplex 1026. The buffer controller 1021 controls first-in and first-out order of the two memory modules. The burst mark transformation module 1022 changes a burst mark of a burst in the buffer from LAST to JOIN in particular conditions. According to register setting of upper arbiters, the priority raise module 1023 gives a life cycle to a second kind of request, and calculates low priority life cycle of the first kind of request and the second kind of request. When a life cycle is over, priority is raised; when the life cycle is not over and the request is responded, the life cycle is transferred upward to an upper buffer. In this embodiment, an upper arbiter sets the buffer 102 for reducing complexity of hardware. The first memory module 1024 and the second memory module 1025 are respectively used to store two requests. The multiplex 1026 selects between output of the first memory module 1024 and output of the second memory module 1025.

Several states about burst mark transformation and priority raise operation in a buffer is described below. In this embodiment, the buffer 102 is only responsible for storing and processing the second kind of bursts. For simplifying description, the buffer 102 is set as an example for describing storage and processing of the first kind of requests.

When the system uses priority raise system, the priority raise module gives a life cycle to a second kind of request according to register setting of an upper arbiter. Meanwhile the priority raise module counter-counts the life cycle of the second kind of requests in the buffer. When the life cycle is over, the priority raise module raises the priority to high.

When the system uses priority raise system, if priority of a request of the selected memory module in the buffer is low and priority of a request of the other memory module is high, the priority raise module raises the priority of the request of the selected memory module to high through the buffer controller.

When the system uses priority raise system, if a request with high priority is on an input port of the buffer, priority of the requests in the buffer is all raised to high.

When the system uses time window limitation system, if a first kind of request with low priority in the buffer, the priority raise module counter-counts a life cycle of the first kind of request. When the life cycle is over, the priority raise module raises the priority of the first kind of request to high by the buffer controller.

When the system uses burst mark transformation system, if a burst mark of a request latest input to the buffer is LAST, and a request being input to the input port of the buffer is detected, the burst mark of the request latest input to the buffer is transformed to JOIN.

When the system uses burst mark transformation system, if a buffer is not responded at current clock cycle, there is a burst with burst mark LAST in a memory unit of the buffer and there is no burst in the other memory unit, and no request input on an input port of the buffer at current clock cycle, and if the buffer receives an instruction from a lower arbiter that a request will be input at next clock cycle, the buffer transforms the burst mark from LAST to JOIN. So it is assured that the burst with burst mark LAST will be output at the next clock cycle, an upper arbiter of the buffer can pre-arbitrates in time, and two stream bursts are allowed to be output continuously.

If an upper arbiter responds a buffer at current clock cycle, the selected memory module of the buffer does not perform priority raise and stream burst mark transformation.

Additionally, if the system does not use priority raise system and time window limitation system, requests with only two kinds of priority compete in the top arbiter, that is HCREQ and LREQ. In this scheme, no matter whether a second kind of stream burst is being output, the top arbiter outputs a first kind of request as long as finds it.

The present invention can be put into practice according to other embodiments without departing from its spirits or basic features. All the disclosed embodiments are just illustrative, but not limited, in all the aspects.

## Claims

1. .A bus arbitration device comprising a top arbiter, the hierarchical bus arbitration device further comprising:
a first arbiter, said first arbiter arbitrating a first kind of requests, wherein the first kind of requests relate to a first kind of master units; and
a second arbiter, said second arbiter arbitrating a second kind of requests different from the first kind of requests, wherein the second kind of requests relate to a second kind of master units different from the first kind of master units,
wherein said first arbiter and said second arbiter are downward respectively from said top arbiter to form a hierarchical arbitration structure.

2. . A bus arbitration device as claimed in Claim 1, wherein said first kind of master units are master units requiring much on delay, and said second kind of master units are master units requiring much on bandwidth.

3. . A bus arbitration device as claimed in Claim 1, wherein in the hierarchical arbitration structure, arbiters of respective levels are coupled by buffers, and the master units are coupled with the arbiters by buffers.

4. . A bus arbitration device as claimed in Claim 3, wherein the buffers are first-in first-out buffers.

5. . A bus arbitration device as claimed in Claim 4, wherein a depth of each of the buffers is two.

6. . A bus arbitration device as claimed in Claim 1, wherein said top arbiter comprises a state machine for controlling operation states of the top arbiter, wherein said state machine comprises three states: idle state, selecting the first kind of requests, and selecting the second kind of requests.

7. . A bus arbitration device as claimed in Claim 6, wherein the system uses stream burst data transmission, and in order to change from the state of selecting the first kind of requests to the state of selecting the second kind of requests, said top arbiter must satisfy the following requirement, that is a stream burst of a currently selected first kind of request finishes transmission, while a second kind of request is waiting for output.
